# EUROPEAN PATENT SPECIFICATION

(11) **EP 3 567 156 B1**
(45) Date of publication and mention of the grant of the patent: **26.08.2020**
(21) Application number: 19170622.5
(22) Date of filing: 23.04.2019
(51) Int. Cl.: D06P 1/44, D06P 5/30

(54) **ULTRA-HIGH WHITENESS AQUEOUS WHITE COLOR PASTE FOR DIGITAL TEXTILE PRINTING INK AND AN INK COMPOSITION USING THE SAME**
ULTRAHOCHWEISSE WÄSSRIGE WEISSFARBPASTE FÜR DIGITALE TEXTILDRUCKFARBE UND TINTENZUSAMMENSETZUNG ENTHALTEND DIESELBE.
PÂTE AQUEUSE DE COULEUR BLANCHE À BLANCHEUR ULTRA-ÉLEVÉE POUR ENCRE D'IMPRESSION NUMÉRIQUE SUR TEXTILE ET COMPOSITION D'ENCRE L'UTILISANT.

(30) Priority: 08.05.2018 TW 107115631
(43) Date of publication of application: 13.11.2019
(73) Proprietor: Everlight Chemical Industrial Corporation, 106 Taipei City (TW)
(72) Inventor: HUANG, Ya-Huang, 328 Taoyuan City (TW); CHEN, Chien-Ming, 328 Taoyuan City (TW); CHEN, Hsiao-San, 328 Taoyuan City (TW)
(74) Representative: van Dam, Vincent

(56) References cited:
- WO-A1-2013/008691
- TW-A- 201 219 504
- US-A1- 2003 052 952

## Description

### BACKGROUND

### 1. Field

The present disclosure relates to an aqueous white color paste for digital textile printing ink and an ink composition using the same. More specifically, the present disclosure relates to an ultra-high whiteness aqueous white color paste for digital textile printing ink and an ink composition using the same.

### 2. Description of Related Art

Even though the white color paste for digital textile printing ink is commercially available, the commercially available white color paste has the disadvantages of insufficient whiteness and unfavorable particle sizes. For example, the commercially available white color paste such as the products of DIC, Dainichiseika Color or Diamond has the problems of insufficient whiteness and large particle sizes, and cannot meet the user's requirement.

In the current white color paste, a small molecule solvent is used as a wetting agent. However, the test results indicate that the small molecule solvent cannot effectively improve the dispersion of the powders in the aqueous white color paste. For example, WO2012040889 discloses the use of the small molecule solvents such as diethylene glycol monobutyl ether (DEGMBE) and triethylene glycol monobutyl ether (TEGMBE). However, the test results indicate that the disclosed small molecule solvents cannot effectively improve the dispersion of the TiO₂ powders in the white color paste.

Therefore, it is desirable to provide an aqueous white color paste with ultra-high whiteness, stable dispersion and suitable particle size distribution to meet the requirement of the application thereof on the ink composition for digital textile printing US2003/052952A and WO2013/008691A are also disclosing white ink compositions for ink-jet printing.

### SUMMARY

An object of the present disclosure is to provide an ultra-high whiteness aqueous white color paste for digital textile printing ink, which has good stability and ultra-high whiteness.

The ultra-high whiteness aqueous white color paste for digital textile printing ink of the present disclosure comprises: 40 wt% to 70 wt% of TiO₂ powders; 1 wt% to 5 wt% of a wetting agent; 2 wt% to 12 wt% of a dispersant; and rest of water. Herein, the TiO₂ powders are rutile TiO₂ powders, the wetting agent is a fatty acid derivative, and the dispersant is an acrylic acid copolymer.

In the ultra-high whiteness aqueous white color paste of the present disclosure, the wettability of the TiO₂ powders (i.e. pigments) in an aqueous carrier can be improved by using the fatty acid derivative as the wetting agent. Meanwhile, when the suitable dispersant is used, the dispersion of the TiO₂ powders (i.e. pigments) can be improved, and the proportion of the powders with large particle sizes can be effectively reduced. Thus, the obtained ultra-high whiteness aqueous white color paste can have good stability and superior whiteness. In addition, the ultra-high whiteness aqueous white color paste of the present disclosure has good pigment dispersion, so the particle size of the TiO₂ powders can be maintained in a certain range. Thus, when the ultra-high whiteness aqueous white color paste of the present disclosure is used to formulate an ink composition for digital textile printing, the TiO₂ powders does not block the nozzle for digital textile printing, and the printed ink can well fix on the textile (such as a cotton textile, a nylon textile, a non-woven textile, a linen textile or a textile made of other fibers) after a fixing process. Thus, the problem that the whiteness is not high enough can be prevented.

In the ultra-high whiteness aqueous white color paste of the present disclosure, the dispersant can be an anionic dispersant, a non-ionic dispersant or a combination thereof. The molecular weight of the dispersant can be ranged from 4000 to 10000. Preferably, the dispersant is the anionic dispersant. When the dispersant is the anionic dispersant, the dispersion of the TiO₂ powders can be improved. In one embodiment of the present disclosure, the acrylic acid copolymer as the dispersant can be a block acrylic acid copolymer, a random acrylic acid copolymer or a combination thereof. Preferably, the acrylic acid copolymer is a random acrylic acid copolymer. Examples of the dispersant suitable for the ultra-high whiteness aqueous white color paste of the present disclosure may include, but are not limited to Joncryl® HPD 196, Joncryl® 586, DISPERBYK-2015 or EDAPLAN® 480. Herein, the dispersant mentioned above can be used alone or two or more dispersants mentioned above can be used in combination.

In the ultra-high whiteness aqueous white color paste of the present disclosure, a molecular weight of the fatty acid derivative as the wetting agent can be ranged from 500 to 2000. Examples of the wetting agent suitable for the ultra-high whiteness aqueous white color paste of the present disclosure may include, but are not limited to TEGO® Dispers652, EDAPLAN®915 or METOLAT 390. Herein, the wetting agent mentioned above can be used alone or two or more wetting agents mentioned above can be used in combination.

In the ultra-high whiteness aqueous white color paste of the present disclosure, a content of the wetting agent can be ranged from 1 wt% to 5 wt%, and preferably ranged from 1.5 wt% to 3 wt%.

In the ultra-high whiteness aqueous white color paste of the present disclosure, Dv50 of the TiO₂ powders is ranged from 200 nm to 320 nm, and Dv95 of the TiO₂ powders is less than 500 nm. Preferably, Dv50 of the TiO₂ powders is ranged from 200 nm to 300 nm, and Dv95 of the TiO₂ powders is less than 500 nm. In the present disclosure, the Dv50 (or Dv0.5) is the particle size of the median for a volume distribution; and the Dv95 is the particle size below which 95% of the volume of particles exists.

In addition, a CIE whiteness of the ultra-high whiteness aqueous white color paste of the present disclosure is greater than 85.

Furthermore, the ultra-high whiteness aqueous white color paste of the present disclosure is prepared by pulverizing a mixture containing primary TiO₂ powders, the wetting agent, the dispersant and the water through a milling process. Herein, the milling process can be a media milling process, a basket milling process, a high speed dispersion process, or a combination thereof, and the milling process mentioned above can be used alone or two or more milling processes mentioned above can be used in combination. There are no constraints on the milling media. In addition, Dv50 of the primary TiO₂ powders used for preparing the ultra-high whiteness aqueous white color paste is greater than 320 nm, and Dv95 thereof is greater than 500 nm. Furthermore, the primary TiO₂ powders is commercial available rutile TiO₂ powders after surface treatment with aluminum or organic materials.

The ultra-high whiteness aqueous white color paste of the present disclosure is mainly used for digital textile printing. Thus, the present disclosure further provides an ink composition for digital textile printing, which comprises: 15 wt% to 20 wt% of the aforesaid ultra-high whiteness aqueous white color paste; 20 wt% to 35 wt% of a resin; 1 wt% to 3 wt% of a cross-linking agent; 0.1 wt% to 0.5 wt% of a surfactant; 15 wt% to 30 wt% of a water soluble organic solvent; 0.1 wt% to 0.2 wt% of a biocide; and rest of water.

Other objects, advantages, and novel features of the invention will become more apparent from the following detailed description when taken in conjunction with the accompanying drawings.

### DETAILED DESCRIPTION OF THE EMBODIMENT

The following embodiments when read with the accompanying drawings are made to clearly exhibit the above-mentioned and other technical contents, features and/or effects of the present disclosure. Through the exposition by means of the specific embodiments, people would further understand the technical means and effects the present disclosure adopts to achieve the above-indicated objectives. Moreover, as the contents disclosed herein should be readily understood and can be implemented by a person skilled in the art, all equivalent changes or modifications which do not depart from the concept of the present disclosure should be encompassed by the appended claims.

Unless specified otherwise, singular words "a" and "the" used in the present specification and claims include one or plural objects.

In the following embodiments (Ex) and comparative embodiments (Comp. Ex) of the present disclosure, the mixture containing primary TiO₂ powders, a wetting agent, a dispersant and water according to the formulation shown in the following Table 1 was pulverized by a media milling process, a basket milling process or a high speed dispersion process for 2 hours to disperse the TiO₂ powders. After the milling process, aqueous white color pastes of the embodiments and the comparative embodiments were obtained.

### Measurement of particle sizes

A particle size analyzer, Malvern Mastersizer 2000, was used to detect the particle sizes.

Herein, the symbol ⊚ refers to that Dv50 is ranged from 250 nm to 290 nm, and Dv95 is less than 450 nm. The symbol ○ refers to that Dv50 is ranged from 290 nm to 320 nm, and Dv95 is ranged from 450 nm to 500 nm. The symbol Δ refers to that Dv50 is ranged from 320 nm to 360 nm, and Dv95 is greater than 500 nm. The symbol X refers to that Dv50 is greater than 360 nm, and Dv95 is greater than 600 nm.

### Measurement of whiteness

The obtained aqueous white color paste was formulated into a white ink composition containing 10 wt% of TiO₂ powders with a water soluble polyurethane dispersion (PUD). A black cloth treated with a pretreatment liquid was coated with the white ink composition by a scraper coating process with a coating machine (the wet film coating machine ZEHNTNER ZUA2000, and the electric coating machine ZEHNTNER ZAA), wherein the coating rate was 5 mm/s, and the thickness of the coating film was set to be 150 µm. Next, the coating film on the black cloth was fixed by a hot pressing process with a hot press machine at 165°C for 90 sec. The black cloth coated with the white ink composition after the fixing process was detected with Datacolor400, the illumination source used herein was filtered to approximate D65, and the CIE whiteness was measured. Alternatively, the black cloth coated with the white ink composition after the fixing process was detected by visual inspection.

Herein, the results of the visual inspection are defined from level 1 to level 5, wherein the level 1 means the whiteness is the worst, the whiteness is getting better when the level is increased, and the level 5 means the whiteness is the best.

The results of the measurements of the particle sizes and the whiteness are listed in the following Table 1.

**Table 1**

| | Comp. Ex 1 | Comp. Ex 2 | Comp. Ex 3 | Comp. Ex 4 | Comp. Ex 5 | Comp. Ex 6 | Ex 1 | Ex 2 | Ex 3 |
|---|---|---|---|---|---|---|---|---|---|
| TiO₂ (Primary particle size =X,Δ) | 50 wt% | | | | | 60 wt% | | | |
| BYK-190 | 12.5 wt% | -- | -- | | | -- | | | |
| BYK-2010 | -- | 12.5 wt% | -- | | | -- | | | |
| Joncryl® HPD 196 | -- | | -- | | | 11.5 wt% | | | |
| Lutensol®AT18 solution | -- | | 36 wt% | | -- | -- | | | |
| Lutensol® XP 99 | -- | | -- | | 37 wt% | | | | |
| Triethylene glycol monobutyl ether | -- | | 5 wt% | -- | 5 wt% | -- | | | |
| Diethylene glycol monobutyl ether | -- | | -- | 5 wt% | -- | -- | | | |
| Wetting agent TEGO Dispers652 | -- | | -- | | | 0 wt% | 1.5 wt% | 3 wt% | 5 wt% |
| Biocide | -- | | -- | | | 0.1 wt% | | | |
| IPA | 5 wt% | | -- | | | -- | | | |
| Water | Adding water to 100 wt% | | | | | | | | |
| Whiteness (visual inspection) | 1 | 1 | 1 | 1 | 3 | 5 | 5 | 5 | 5 |
| Whiteness CIE value | 68.21 | 69.22 | 71.32 | 70.12 | 76.10 | 88.01 | 89.52 | 87.35 | 88.12 |
| Particle sizes Dv50 and Dv95 | Δ | Δ | Δ | Δ | Δ | Δ | ⊚ | ⊚ | ○ |

As shown in Table 1, the white ink compositions prepared by the aqueous white color paste of the comparative embodiments 1 to 6 show poor particle sizes and/or whiteness. On the other hand, the white ink compositions prepared by the aqueous white color paste of the embodiments 1 to 3 show excellent particle sizes and whiteness. Particularly, the aqueous white color paste of the comparative embodiment 6 contains anionic acrylic acid copolymer dispersant but does not contain the wetting agent, and the particle sizes of the TiO₂ powders are still large. However, the aqueous white color paste of the embodiments 1 to 3 contains the anionic acrylic acid copolymer dispersant and the wetting agent, the surface wettability of the TiO₂ powders can be increased in the aqueous system, the dispersion of the TiO₂ powders can be improved, and the particle sizes of the TiO₂ powders are in a desirable range. When the particle sizes of the TiO₂ powders are distributed to have small diameters, the TiO₂ powders contained in the ink does not block the nozzle for digital textile printing. In addition, compared with the comparative embodiments 1 to 5, when the non-ionic acrylic acid copolymer is used as the dispersant in the aqueous white color paste of the embodiments 1 to 3, the whiteness can be increased two or three levels by visual inspection.

The particle sizes of the TiO₂ powders in the aqueous white color paste of the embodiment 1 and in the commercial available white color pastes were measured. In addition, the whiteness of the white ink compositions prepared by the aqueous white color paste of the embodiment 1 and the commercial available white color pastes was also measured. The results are shown in the following Table 2.

**Table 2**

| White color paste | DIC FG White | Dainichiseika Color & Chemicals Mfg.Co.,Ltd. JW-062 | Dimond PW066 | Ex 1 |
|---|---|---|---|---|
| | Japan | Japan | England | - |
| Particle sizes | Dv50=466nm | Dv50=147nm | Dv50=165nm | Dv50=271nm |
| Dv50 and Dv95 | Dv95=1202nm | Dv95=323nm | Dv95=332nm | Dv95=410nm |
| Whiteness (visual inspection) | 3 | 3 | 2 | 5 |

As shown in Table 2, the aqueous white color paste of the embodiment 1 shows better TiO₂ powder particle size distribution and excellent whiteness.

Hereinafter, the influence of different contents of the TiO₂ powders and different contents of the wetting agent on the TiO₂ powder particle size distribution in the aqueous white color paste is compared. In the following Table 3, only the differences between the embodiments 4 to 5 and the embodiments 1 to 2 are listed. The particle size of the TiO₂ powders, the species and the content of the dispersant, the species of the wetting agent, the species and the content of the biocide used in the embodiments 4 and 5 are the same as those used in the embodiments 1 and 2. The results are shown in the following Table 3.

**Table 3**

| | TiO₂ powders (wt%) | Wetting agent (wt%) | Particle size before storage (nm) | |
|---|---|---|---|---|
| | | | Dv50 | Dv95 |
| Comp. Ex 6 | 60 | 0 | 353 | 565 |
| Ex 1 | 60 | 1.5 | 271 | 410 |
| Ex 2 | 60 | 3 | 265 | 404 |
| Ex 4 | 65 | 3 | 287 | 454 |
| Ex 5 | 70 | 3 | 283 | 467 |

Hereinafter, the influence of different wetting agents on the TiO₂ powder particle size distribution in the aqueous white color paste is compared. In the following Table 4, only the differences between the embodiments 6 to 7 and the embodiment 2 are listed. The rest, such as the particle size of the TiO₂ powders and the species and the content of the biocide used in the embodiments 6 and 7 are the same as those used in the embodiment 2.

**Table 4**

| | TiO₂ powders (wt%) | Dispersant Joncryl® HPD 196 (wt%) | Wetting agent (wt%) | | | Particle size (nm) | |
|---|---|---|---|---|---|---|---|
| | | | TEGO® Dispers652 | EDAPLAN® 915 | METOLAT 390 | Dv50 | Dv95 |
| | | | Molecule weight: 1600 | Molecule weight: 910 | Molecule weight: 1950 | | |
| Ex 2 | 60 | 11.5 | 3 | -- | -- | 265 | 404 |
| Ex 6 | 60 | 11.5 | -- | 3 | -- | 266 | 402 |
| Ex 7 | 60 | 11.5 | -- | -- | 3 | 296 | 424 |

According to the results shown in Table 4, when different fatty acid derivatives are used as the wetting agents, all the obtained aqueous white color pastes have good stability, dispersion and particle size distribution.

Hereinafter, the influence of different dispersants on the TiO₂ powder particle size distribution in the aqueous white color paste is compared. In the following Table 5, only the differences between the embodiment 1 and the comparative embodiments 7 to 8 and between the embodiment 1 and the embodiments 8 to 9 are listed. The rest, such as the particle size of the TiO₂ powders and the species and the content of the biocide used in the comparative embodiments 7 to 8 and the embodiments 8 to 9 are the same as those used in the embodiment 1. The results are shown in the following Table 5.

**Table 5**

| | TiO₂ powders (wt%) | Dispersant Joncryl® 586 (wt%) | Dispersant DISPERBYK-2015 (wt%) | Wetting agent TEGO®Dispers652 (wt%) | Particle size (nm) | |
|---|---|---|---|---|---|---|
| | | | | | Dv50 | Dv95 |
| Comp. | 60 | 11.5 | -- | 0 | 354 | 592 |
| Ex 7 | | | | | | |
| Ex 8 | 60 | 11.5 | -- | 3 | 288 | 462 |
| Comp. Ex 8 | 60 | -- | 11.5 | 0 | 332 | 552 |
| Ex9 | 60 | -- | 11.5 | 3 | 280 | 425 |

According to the results shown in Table 5, when different acrylic acid copolymer are used as the dispersants, all the obtained aqueous white color pastes have good stability, dispersion and particle size distribution. In addition, compared with the comparative embodiments 7 and 8, the aqueous white color pastes of the embodiments 8 and 9 have good dispersion and particle size distribution when the acrylic acid copolymer as the dispersant and the fatty acid derivatives as the wetting agents are used together.

According to the results shown in Table 1 to Table 4, when the random acrylic acid copolymer is used as the dispersant and the fatty acid derivative is used as the wetting agent in the aqueous white color paste of the present disclosure, the wetting agent in the aqueous white color paste can improve the surface wettability of the TiO₂ powders to improve the dispersion of the TiO₂ powders in the aqueous white color paste. Thus, the particle size of the aqueous white color paste can be significantly reduced. In addition, the obtained aqueous white color paste can show excellent stability and whiteness. Furthermore, the aqueous white color paste of the present disclosure has excellent storage stability and stably dispersion, and thus no flocculation or coagulation is generated in the aqueous white color paste of the present disclosure.

The aqueous white color paste prepared in the embodiment 1 was formulated into a white ink composition according to the formulation shown in the following Table 6. A black cloth treated with a pretreatment liquid was coated with the obtained white ink composition by an inkjet printing process with a printing machine (Epson 4880), and good inkjet printability can be obtained.

**Table 6**

| White ink composition | Content (wt%) |
|---|---|
| Aqueous white color paste of the embodiment 1 | 15-20 |
| Ethylene Glycol | 10-20 |
| Glycerol | 5-10 |
| Dispersant BYK-349 | 0.1-0.5 |
| Biocide | 0.1-0.2 |
| PUD(1010NHR) | 20-35 |
| Cross-linking agent | 1-3 |
| water | Adding to 100% |

After the tests on the washing fastness (AATCC 61 3A) and the dry/wet rubbing fastness (AATCC 8), the white pattern obtained by the inkjet printing process has the washing fastness at levels 4 to 5 and the dry/wet rubbing fastness at levels 4 to 5.

## Claims

1. An ultra-high whiteness aqueous white color paste for digital textile printing ink, comprising:
40 wt% to 70 wt% of TiO₂ powders;
1 wt% to 5 wt% of a wetting agent;
2 wt% to 12 wt% of a dispersant; and
rest of water,
wherein the TiO₂ powders are rutile TiO₂ powders, the wetting agent is a fatty acid derivative, and the dispersant is an acrylic acid copolymer.

2. The ultra-high whiteness aqueous white color paste of claim 1, wherein the dispersant is an anionic dispersant, a non-ionic dispersant or a combination thereof, preferably wherein the dispersant is the anionic dispersant.

3. The ultra-high whiteness aqueous white color paste of claim 1 or 2, wherein a molecular weight of the fatty acid derivative is ranged from 500 to 2000.

4. The ultra-high whiteness aqueous white color paste of any of the claims 1 to 3, wherein the acrylic acid copolymer is a random acrylic acid copolymer.

5. The ultra-high whiteness aqueous white color paste of any of the claims 1 to 4, wherein Dv50 of the TiO₂ powders is ranged from 200 nm to 320 nm, and Dv95 of the TiO₂ powders is less than 500 nm as measured according to the method disclosed in the description.

6. The ultra-high whiteness aqueous white color paste of any of the claims 1 to 5, wherein a content of the wetting agent is ranged from 1.5 wt% to 3 wt%.

7. The ultra-high whiteness aqueous white color paste of any of the claims 1 to 6, wherein a CIE whiteness of the ultra-high whiteness aqueous white color paste is greater than 85 as measured according to the method disclosed in the description.

8. An ink composition for digital textile printing, comprising:
15 wt% to 20 wt% of an ultra-high whiteness aqueous white color paste, wherein the ultra-high whiteness aqueous white color paste comprises:
40 wt% to 70 wt% of TiO₂ powders based on a total weight of the ultra-high whiteness aqueous white color paste;
1 wt% to 5 wt% of a wetting agent based on the total weight of the ultra-high whiteness aqueous white color paste;
2 wt% to 12 wt% of a dispersant based on the total weight of the ultra-high whiteness aqueous white color paste; and
rest of water based on the total weight of the ultra-high whiteness aqueous white color paste,
wherein the TiO₂ powders are rutile TiO₂ powders, the wetting agent is a fatty acid derivative, and the dispersant is an acrylic acid copolymer;
20 wt% to 35 wt% of a resin;
1 wt% to 3 wt% of a cross-linking agent;
0.1 wt% to 0.5 wt% of a surfactant;
15 wt% to 30 wt% of a water soluble organic solvent;
0.1 wt% to 0.2 wt% of a biocide; and
rest of water.

9. The ink composition of claim 8, wherein the dispersant is an anionic dispersant, a non-ionic dispersant or a combination thereof, preferably wherein the dispersant is the anionic dispersant.

10. The ink composition of any of the claims 8 or 9, wherein a molecular weight of the fatty acid derivative is ranged from 500 to 2000.

11. The ink composition of any of the claims 8 to 10, wherein the acrylic acid copolymer is a random acrylic acid copolymer.

12. The ink composition of any of the claims 8 to 11, wherein Dv50 of the TiO₂ powders is ranged from 200 nm to 320 nm, and Dv95 of the TiO₂ powders is less than 500 nm measured according to the method disclosed in the description.

13. The ink composition of any of the claims 8 to 12, wherein a content of the wetting agent is ranged from 1.5 wt% to 3 wt%.

14. The ink composition of any of the claims 8 to 13, wherein a CIE whiteness of the ultra-high whiteness aqueous white color paste is greater than 85 as measured according to the method disclosed in the description.

15. The ink composition of any of the claims 8 to 14 or the ultra-high whiteness aqueous white color paste of any of the claims 1 to 7, wherein the ultra-high whiteness aqueous white color paste is prepared by pulverizing a mixture containing primary TiO₂ powders, the wetting agent, the dispersant and the water through a milling process, wherein the milling process is a media milling process, a basket milling process, a high speed dispersion process, or a combination thereof.

## Patentansprüche

1. Eine ultrahochweiße, wässrige Weißfarbpaste für digitale Textildrucktinte, enthaltend:
40 Gew.-% bis 70 Gew.-% TiO₂-Pulver,
1 Gew.-% bis 5 Gew.-% eines Benetzungsmittels,
2 Gew.-% bis 12 Gew.-% eines Dispergiermittels, und
den Rest Wasser,
wobei die TiO₂-Pulver rutilförmige TiO₂-Pulver sind, das Benetzungsmittel ein Fettsäurederivat ist und das Dispergiermittel ein Acrylsäure-Copolymer ist.

2. Die ultrahochweiße, wässrige Weißfarbpaste gemäß Anspruch 1, wobei das Dispergiermittel ein anionisches Dispergiermittel, ein nichtionisches Dispergiermittel oder eine Kombination davon ist, wobei vorzugsweise das Dispergiermittel das anionische Dispergiermittel ist.

3. Die ultrahochweiße, wässrige Weißfarbpaste gemäß Anspruch 1 oder 2, wobei ein Molekulargewicht des Fettsäurederivats von 500 bis 2000 reicht.

4. Die ultrahochweiße, wässrige Weißfarbpaste gemäß einem der Ansprüche 1 bis 3, wobei das Acrylsäure-Copolymer ein zufällig angeordnetes Acrylsäure-Copolymer ist.

5. Die ultrahochweiße, wässrige Weißfarbpaste gemäß einem der Ansprüche 1 bis 4, wobei der Dv50-Wert der TiO₂-Pulver von 200 nm bis 320 nm reicht, und der Dv95-Wert der TiO₂-Pulver kleiner als 500 nm ist, gemessen gemäß dem Verfahren, das in der Beschreibung offenbart ist.

6. Die ultrahochweiße, wässrige Weißfarbpaste gemäß einem der Ansprüche 1 bis 5, wobei ein Gehalt des Benetzungsmittels von 1,5 Gew.-% bis 3 Gew.-% reicht.

7. Die ultrahochweiße, wässrige Weißfarbpaste gemäß einem der Ansprüche 1 bis 6, wobei ein CIE-Weißgrad der ultrahochweißen, wässrigen Weißfarbpaste größer als 85 ist, wie gemäß dem Verfahren, das in der Beschreibung offenbart ist, gemessen.

8. Eine Tintenzusammensetzung für den digitalen Textildruck, enthaltend:
15 Gew.-% bis 20 Gew.-% einer ultrahochweißen, wässrigen Weißfarbpaste, wobei die ultrahochweiße, wässrige Weißfarbpaste enthält:
40 Gew.-% bis 70 Gew.-% TiO₂-Pulver, bezogen auf das Gesamtgewicht der ultrahochweißen, wässrigen Weißfarbpaste,
1 Gew.-% bis 5 Gew.-% eines Benetzungsmittels, bezogen auf das Gesamtgewicht der ultrahochweißen, wässrigen Weißfarbpaste,
2 Gew.-% bis 12 Gew.-% eines Dispergiermittels, bezogen auf das Gesamtgewicht der ultrahochweißen, wässrigen Weißfarbpaste, und den Rest Wasser, bezogen auf das Gesamtgewicht der ultrahochweißen, wässrigen Weißfarbpaste,
wobei die TiO₂-Pulver rutilförmige TiO₂-Pulver sind, das Benetzungsmittel ein Fettsäurederivat ist und das Dispergiermittel ein Acrylsäure-Copolymer ist,
20 Gew.-% bis 35 Gew.-% eines Harzes,
1 Gew.-% bis 3 Gew.-% eines Vernetzungsmittels,
0,1 Gew.-% bis 0,5 Gew.-% eines Tensids,
15 Gew.-% bis 30 Gew.-% eines wasserlöslichen organischen Lösungsmittels,
0,1 Gew.-% bis 0,2 Gew.-% eines Biozids, und
den Rest Wasser.

9. Die Tintenzusammensetzung gemäß Anspruch 8, wobei das Dispergiermittel ein anionisches Dispergiermittel, ein nichtionisches Dispergiermittel oder eine Kombination davon ist, wobei vorzugsweise das Dispergiermittel das anionische Dispergiermittel ist.

10. Die Tintenzusammensetzung gemäß einem der Ansprüche 8 oder 9, wobei ein Molekulargewicht des Fettsäurederivats von 500 bis 2000 reicht.

11. Die Tintenzusammensetzung gemäß einem der Ansprüche 8 bis 10, wobei das Acrylsäure-Copolymer ein zufällig angeordnetes Acrylsäure-Copolymer ist.

12. Die Tintenzusammensetzung gemäß einem der Ansprüche 8 bis 11, wobei Dv50-Wert der TiO₂-Pulver von 200 nm bis 320 nm reicht, und der Dv95-Wert der TiO₂-Pulver kleiner als 500 nm ist, gemessen gemäß dem Verfahren, das in der Beschreibung offenbart ist.

13. Die Tintenzusammensetzung gemäß einem der Ansprüche 8 bis 12, wobei ein Gehalt des Benetzungsmittels von 1,5 Gew.-% bis 3 Gew.-% reicht.

14. Die Tintenzusammensetzung gemäß einem der Ansprüche 8 bis 13, wobei ein CIE-Weißgrad der ultrahochweißen, wässrigen Weißfarbpaste größer als 85 ist, wie gemäß dem Verfahren, das in der Beschreibung offenbart ist, gemessen.

15. Die Tintenzusammensetzung gemäß einem der Ansprüche 8 bis 14, oder die ultrahochweiße, wässrige Weißfarbpaste gemäß einem der Ansprüche 1 bis 7, wobei die ultrahochweiße, wässrige Weißfarbpaste durch Pulverisieren einer Mischung, die die primären TiO₂-Pulver, das Benetzungsmittel, das Dispergiermittel und Wasser enthält, mittels eines Mahlverfahrens hergestellt wird, wobei das Mahlverfahren ein Medium-Mahlverfahren, ein Basket-Mahlverfahren, ein Hochgeschwindigkeits-Dispersionsverfahren oder eine Kombination davon ist.

## Revendications

1. Pâte aqueuse de couleur blanche présentant une blancheur ultra - élevée pour une encre d'impression numérique sur textile, comprenant :
de 40 % en poids à 70 % en poids de poudres de TiO₂ ;
de 1 % en poids à 5 % en poids d'un agent mouillant ;
de 2 % en poids à 12 % en poids d'un dispersant ; et
le reste étant de l'eau,
dans laquelle les poudres de TiO₂ sont des poudres de TiO₂ rutile, l'agent mouillant est un dérivé d'acide gras et le dispersant est un copolymère d'acide acrylique.

2. Pâte aqueuse de couleur blanche présentant une blancheur ultra - élevée selon la revendication 1, dans laquelle le dispersant est un dispersant anionique, un dispersant non ionique ou une combinaison de ceux-ci, de préférence dans laquelle le dispersant est un dispersant anionique.

3. Pâte aqueuse de couleur blanche présentant une blancheur ultra - élevée selon la revendication 1 ou 2, dans laquelle un poids moléculaire du dérivé d'acide gras est compris entre 500 et 2000.

4. Pâte aqueuse de couleur blanche présentant une blancheur ultra - élevée selon l'une quelconque des revendications 1 à 3, dans laquelle le copolymère d'acide acrylique est un copolymère statistique d'acide acrylique.

5. Pâte aqueuse de couleur blanche présentant une blancheur ultra - élevée selon l'une quelconque des revendications 1 à 4, dans laquelle la Dv50 des poudres de TiO₂ est comprise entre 200 nm et 320 nm, et la Dv95 des poudres de TiO₂ est inférieure à 500 nm telle que mesurée conformément à la méthode divulguée dans la description.

6. Pâte aqueuse de couleur blanche présentant une blancheur ultra - élevée selon l'une quelconque des revendications 1 à 5, dans laquelle une teneur de l'agent mouillant est comprise entre 1,5 % en poids et 3 % en poids.

7. Pâte aqueuse de couleur blanche présentant une blancheur ultra - élevée selon l'une quelconque des revendications 1 à 6, dans laquelle une blancheur CIE de la pâte aqueuse de couleur blanche présentant une blancheur ultra - élevée est supérieure à 85, telle que mesurée conformément à la méthode divulguée dans la description.

8. Composition d'encre pour une impression numérique sur textile, comprenant :
de 15 % en poids à 20 % en poids d'une pâte aqueuse de couleur blanche présentant une blancheur ultra - élevée, dans laquelle la pâte aqueuse de couleur blanche présentant une blancheur ultra - élevée comprend :
de 40 % en poids à 70 % en poids de poudres de TiO₂ sur la base d'un poids total de la pâte aqueuse de couleur blanche présentant une blancheur ultra - élevée ;
de 1 % en poids à 5 % en poids d'un agent mouillant sur la base d'un poids total de la pâte aqueuse de couleur blanche présentant une blancheur ultra - élevée ;
de 2 % en poids à 12 % en poids d'un dispersant sur la base d'un poids total de la pâte aqueuse de couleur blanche présentant une blancheur ultra - élevée ; et
le reste étant de l'eau, sur la base d'un poids total de la pâte aqueuse de couleur blanche présentant une blancheur ultra - élevée,
dans laquelle les poudres de TiO₂ sont des poudres de TiO₂ rutile, l'agent mouillant est un dérivé d'acide gras et le dispersant est un copolymère d'acide acrylique ;
de 20 % en poids à 35 % en poids d'une résine ;
de 1 % en poids à 3 % en poids d'un agent de réticulation ;
de 0,1 % en poids à 0,5 % en poids d'un tensioactif ;
de 15 % en poids à 30 % en poids d'un solvant organique soluble dans l'eau ;
de 0,1 % en poids à 0,2 % en poids d'un biocide ; et
le reste étant de l'eau.

9. Composition d'encre selon la revendication 8, dans laquelle le dispersant est un dispersant anionique, un dispersant non ionique ou une combinaison de ceux-ci, de préférence dans laquelle le dispersant est un dispersant anionique.

10. Composition d'encre selon l'une quelconque des revendications 8 ou 9, dans laquelle un poids moléculaire du dérivé d'acide gras est compris entre 500 et 2000.

11. Composition d'encre selon l'une quelconque des revendications 8 à 10, dans laquelle le copolymère d'acide acrylique est un copolymère statistique d'acide acrylique.

12. Composition d'encre selon l'une quelconque des revendications 8 à 11, dans laquelle la Dv50 des poudres de TiO₂ est comprise entre 200 nm et 320 nm, et la Dv95 des poudres de TiO₂ est inférieure à 500 nm telle que mesurée conformément à la méthode divulguée dans la description.

13. Composition d'encre selon l'une quelconque des revendications 8 à 12, dans laquelle une teneur de l'agent mouillant est comprise entre 1,5 % en poids et 3 % en poids.

14. Composition d'encre selon l'une quelconque des revendications 8 à 13, dans laquelle une blancheur CIE de la pâte aqueuse de couleur blanche présentant une blancheur ultra - élevée est supérieure à 85, telle que mesurée conformément à la méthode divulguée dans la description.

15. Composition d'encre selon l'une quelconque des revendications 8 à 14 ou pâte aqueuse de couleur blanche présentant une blancheur ultra - élevée selon l'une quelconque des revendications 1 à 7, dans laquelle la pâte aqueuse de couleur blanche présentant une blancheur ultra - élevée est préparée en pulvérisant un mélange qui contient des poudres de TiO₂ primaires, l'agent mouillant, le dispersant et l'eau en faisant appel à un processus de broyage, dans laquelle le processus de broyage est un processus de broyage à milieux de broyage, un processus de broyage à panier, un processus de dispersion haute vitesse ou une combinaison de ceux-ci.
